# EUROPEAN PATENT APPLICATION

(11) **EP 4 701 009 A1**
(43) Date of publication of application: **25.02.2026**
(21) Application number: 25194048.2
(22) Date of filing: 05.08.2025
(51) Int. Cl.: H02B 11/04, H01R 4/48, H01R 13/04, H01R 13/187, H01R 13/33

(54) **LOW RESISTANCE POWER CONNECTOR**

(30) Priority: 23.08.2024 US 202418813596
(71) Applicant: Schneider Electric USA, Inc., Andover, MA 01810 (US)
(72) Inventor: Carne, Clinton N., North Liberty, IA (US); Woodson, Cameron L., Cedar Rapids, IA (US)
(74) Representative: Manitz Finsterwald Patent- und Rechtsanwaltspartnerschaft mbB

(57) **Abstract**

A low resistance connector for a power connection system. The connector has a trunk configured to attach to a circuit breaker, first and second ribs projecting from the trunk, and first and second electrically conductive springs. The ribs define a slot therebetween and each has an opposing slot-facing surface thereof. The slot-facing surfaces of the ribs have channel formed therein in which the springs are positioned. The slot is configured to receive a stab of a power connector such that the springs are biased against the stab when the stab is received within the slot.

## Description

### FIELD

The present disclosure relates generally to power distribution devices and systems and, more particularly, to low resistance power connections for coupling air circuit breaker (ACB) clusters, molded case circuit breakers (MCCBs), and the like to electrical busbars or for making other electrical connections.

### BACKGROUND

Circuit breakers are most commonly used to protect electrical equipment from overload and short circuit events. Large circuit breakers that carry thousands of amps of current are often installed within metal-enclosed switchgear assemblies. The switchgear assemblies are connected to large electrical conductors called busbars that transmit current from a power source, such as a power utility, through the installed circuit breakers, to loads that are protected by the circuit breakers. During installation, a circuit breaker, which can weigh hundreds of pounds, is typically lifted into a switchgear assembly and racked by mounting it into a drawout cradle, or chassis, configured to receive the circuit breaker. Once racked into the switchgear assembly, the circuit breaker completes the electrical circuit to be protected.

A drawout ACB, for example, has a fixed drawout cradle and a removable breaker body. The drawout cradle is attached to the cabinet of the switchgear assembly and is adapted to receive and support the breaker body. The cradle has a number of electrically conductive power connectors, which are connected to one or more busbars, that extend into the interior of the cradle. When the breaker body is racked into the cradle, cluster-type connectors at the rear of the circuit breaker engage the power connectors. In this manner, the power connectors electrically connect the circuit breaker to the circuit to be protected.

The most common conventional approach to make this drawout electrical connection is to use a cluster design, which is made up of several laminated copper fingers. This design has two joints. At a first joint, the cluster is mounted on a cylindrical mount attached to the breaker body that allows the cluster to pivot. The rotating pivot allows the cluster to self-align at a second sliding joint (onto a mating stab of the power connector). This design has an ability to allow for lateral misalignment between the circuit breaker and the receiving stab. It also allows for tolerance stack up in terms of how far the cluster is pushed onto the receiving stab. A disadvantage of the conventional cluster approach is that the contact area is restricted and only shares three points of contact for electrical connection (e.g., two contact points at the first joint, namely, 1) between the cylindrical features of the fingers and the cluster finger pivot and 2) where the cluster engages the pivot depending on feature size, alignment, variation in leaf spring force of the fingers, and breaker body to cradle alignment; and one contact point at the second joint where the cluster engages the stab). The additional resistance of this design is about equal to that of primary contacts inside the circuit breaker itself.

In addition, conventional connector designs generate excessive heat. One solution for addressing excessive heating is to increase the number of fingers but doing so undesirably increases the footprint of the circuit breaker. Alternatively, forced convection (fans) may be used to reduce the heat in the system but such a solution would present an unacceptable risk of a malfunctioning fan and would not lower the power loss of the system

Commonly assigned U.S. Patent Application Publication No. 2016/0020052 and U.S. Patent No. 8,730,652, the entire disclosures of which are incorporated herein by reference, disclose known power connection systems for connecting circuit breakers to electrical busbars, utilizing a cluster design.

### SUMMARY

Aspects of the present disclosure reduce the footprint of low voltage circuit breakers and other devices having electrical joints without giving up ampacity by benefitting from lower power losses than conventional designs. Low voltage power circuit breakers, air circuit breakers, and the like are specifically designed to be of a drawout construction. This construction type requires an electrical joint that can be easily connected and disconnected to maintain these types of circuit breakers, for example, on a workbench. The electrical connection between the breaker body and drawout cradle adds additional resistance to the current path and, advantageously, the present disclosure relates to a low resistance electrical joint that maintains a secure mechanical connection.

In an aspect, a power connection system electrically connects a circuit breaker to an electrically conductive busbar. The power connection system comprises first and second electrically conductive connectors. The first connector has a base portion configured to attach to a busbar and at least one stab projecting from the base portion. The second connector is configured to attach to a circuit breaker and to electrically couple the circuit breaker to the busbar via the first connector. The second connector comprises a trunk configured to attach to the circuit breaker, first and second ribs projecting from the trunk, and first and second electrically conductive springs. The ribs define a slot therebetween and each has an opposing slot-facing surface thereof. The slot-facing surface of the first rib has a first channel formed therein and the opposing slot-facing surface of the second rib has a second channel formed therein. The first spring is positioned within the first channel and the second spring is positioned within the second channel. The slot is configured to receive the stab of the first connector such that the springs are biased against the stab when the stab is received within the slot.

In another aspect, a switchgear assembly electrically couples a circuit breaker to an electrically conductive power busbar. The switchgear assembly comprises a housing configured to receive therein the circuit breaker, an electrical power connector, and a circuit breaker connector. The electrical power connector includes a stab projecting from a base portion that is mounted to a back portion of the housing and configured to electrically connect to the busbar. The circuit breaker connector is configured to electrically connect to the circuit breaker and to electrically connect the circuit breaker to the busbar via the electrical power connector. The circuit breaker connector comprises a trunk configured to attach to the circuit breaker, first and second ribs projecting from the trunk, and first and second electrically conductive springs. The ribs define a slot therebetween and each has an opposing slot-facing surface thereof. The slot-facing surface of the first rib has a first channel formed therein and the opposing slot-facing surface of the second rib has a second channel formed therein. The first spring is positioned within the first channel and the second spring is positioned within the second channel. The slot is configured to receive the stab of the electrical power connector such that the springs are biased against the stab when the stab is received within the slot.

In yet another aspect, a breaker connector connects a circuit breaker to an electrically conductive power busbar in an electrical assembly. The electrical assembly has an electrical power connector including a stab projecting from a base portion that is configured to electrically connect to the busbar. The breaker connector comprises a trunk configured to attach to the circuit breaker, first and second parallel ribs projecting from the trunk, and first and second electrically conductive springs. The ribs define a slot therebetween and each has an opposing slot-facing surface thereof. The slot-facing surface of the first rib has a first channel formed therein and the opposing slot-facing surface of the second rib has a second channel formed therein. The first spring is positioned within the first channel and the second spring is positioned within the second channel. The slot is configured to receive the stab of the electrical power connector such that the springs are biased against the stab when the stab is received within the slot and the breaker connector electrically connects the circuit breaker to the busbar via the electrical power connector.

Other objects and features of the present invention will be in part apparent and in part pointed out herein.

### BRIEF DESCRIPTION OF THE DRAWINGS

FIG. 1 is a fragmentary perspective view of a representative circuit breaker assembly electrically coupled to a representative drawout cradle according to an embodiment.
FIG. 2 is a perspective view of an exemplary circuit breaker connector of the circuit breaker assembly of FIG. 1 according to an embodiment.
FIG. 3A illustrates a canted coil for use with the circuit breaker connector of FIG. 2 according to an embodiment.
FIG. 3B is an enlarged view of a single coil of the canted coil of FIG. 3A according to an embodiment.
FIGS. 4 and 5 illustrate a circuit breaker connector electrically and mechanically coupled to a power connector according to an embodiment.

Corresponding reference characters indicate corresponding parts throughout the drawings.

### DETAILED DESCRIPTION

The features and other details of the concepts, systems, and techniques sought to be protected herein will now be more particularly described. It will be understood that any specific embodiments described herein are shown by way of illustration and not as limitations of the disclosure and the concepts described herein. Features of the subject matter described herein can be employed in various embodiments without departing from the scope of the concepts sought to be protected.

Aspects of the present disclosure provide a specific combination of multiple canted coil electrical springs in combination with a coil support that reduces the number of electrical joints used as a primary current path power connection for a circuit breaker.

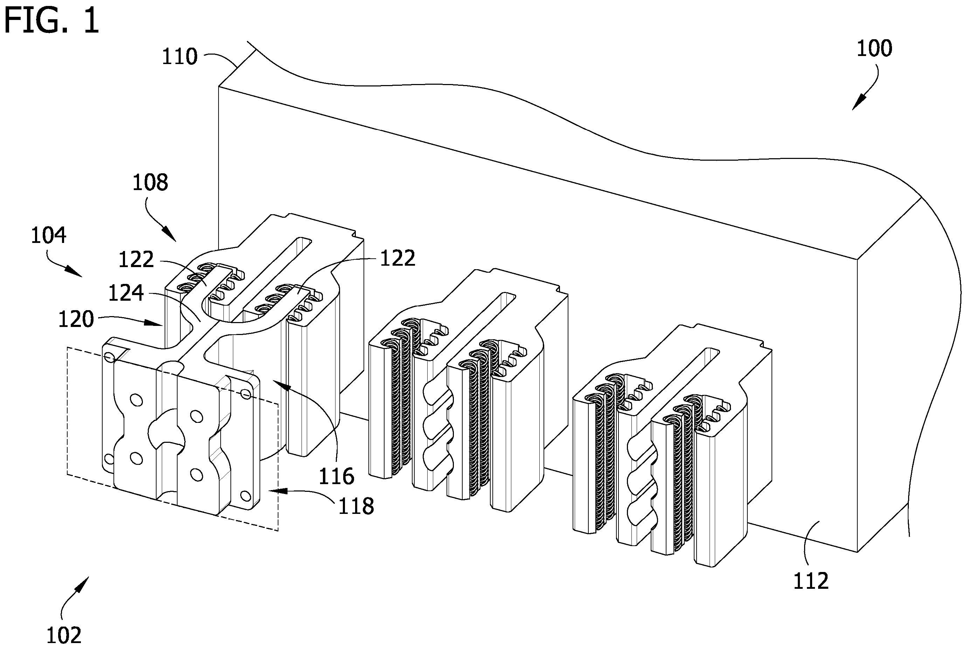

FIG. 1 is a perspective-view illustration of a representative circuit breaker assembly, designated generally as 100. The circuit breaker 100 may take on a variety of different forms, but it is desirable in at least some embodiments for circuit breaker 100 to be a "drawout type" circuit breaker. In this regard, circuit breaker 100 can be conventionally mounted for movement into and out of a drawout cradle of a representative switchgear assembly, which is designated generally at 102 in FIG. 1, for connection to an electrically conductive power busbar. The switchgear assembly 102 comprises, for instance, a cabinet (also referred to herein as an enclosure or housing) (not shown) and provides an electrical connection to a power busbar (not shown).

In the illustrated embodiment, circuit breaker 100 is electrically coupled to the switchgear assembly 102 via one or more electrically conductive power connectors 104, which can be of the turnable joint mount (TIM) connector type. Although only one electrical power connector 104 is shown in FIG. 1, it should be readily understood that switchgear assembly 102 will typically include a number of similarly oriented power connectors 104 (e.g., one connector for each of a plurality of circuit breaker connectors 108). When properly connected, circuit breaker 100 can be operable to distribute power from a primary power source, such as a standard utility power source, to a load. The circuit breaker 100 includes, for example, a housing 110 having a rearward facing wall 112. Three substantially identical breaker connectors 108 in the illustrated embodiment are fixed to the rearward facing wall 112 of circuit breaker housing 110, oriented parallel to one another in a generally vertical orientation.

Advantageously, the breaker connectors 108 in accordance with one or more embodiments eliminate the need for conventional cluster supports affixed to the rearward facing wall 112 and the corresponding cluster connectors mounted on the supports for engaging power connectors 104.

While FIG. 1 illustrates a switchgear embodiment, it should be understood that aspects of the present disclosure could be embodied in other types of electrical apparatuses and other types of electrical connections. In addition, it should be understood that the drawings are not necessarily to scale and are provided purely for explanatory purposes. For this reason, the individual and relative dimensions and orientations presented herein are not to be considered limiting. To that end, circuit breaker 100 can include greater than or fewer than three breaker connectors 108 of similar or differing structure to that shown in the drawings.

Each power connector 104 comprises three primary segments: a fork-shaped head 116, a base 118, and a yoke 120. In general, the yoke 120 extends between and electrically connects the base 118 to the fork-shaped head 116. The head 116, base 118, and yoke 120 can be integrally formed as a single-piece, monolithic structure, as seen in FIG. 1. The fork-shaped head 116 is configured to electrically connect power connector 104 to circuit breaker 100 of FIG. 1 via breaker connector 108. For instance, the fork-shaped head 116 comprises two generally flat, blunt-ended stabs (also known as tines or prongs) 122 that are connected via an intermediate web 124. Each stab 122 is designed to receive thereon and thereby operatively connect to one or more circuit breaker connectors, such as the breaker connectors 108 of FIG. 1. The base 118, generally speaking, is configured to mount power connector 104 to a mounting surface of switchgear assembly 102 and operatively couple power connector 104 to an electrical circuit by way of a busbar. In an embodiment, this connection to the busbar is through, for example, a turnable joint coupling.

The power connectors 104, singly and in any combination, can take on a variety of different configurations, including numerous shapes and sizes, some of which are disclosed in commonly assigned U.S. Patent No. 8,730,652, which is incorporated herein by reference in its entirety and for all purposes. It may be desirable in some aspects of this disclosure that power connector 104 and/or breaker connector 108 be formed via casting or molding. Optionally, power connector 104 and/or breaker connector 108 may be formed via extrusion or other known methods, which can include various known machining operations. For some applications, it is desirable that power connector 104 and circuit breaker connector 108 be fabricated from a highly electrically conductive material, such as copper or aluminum.

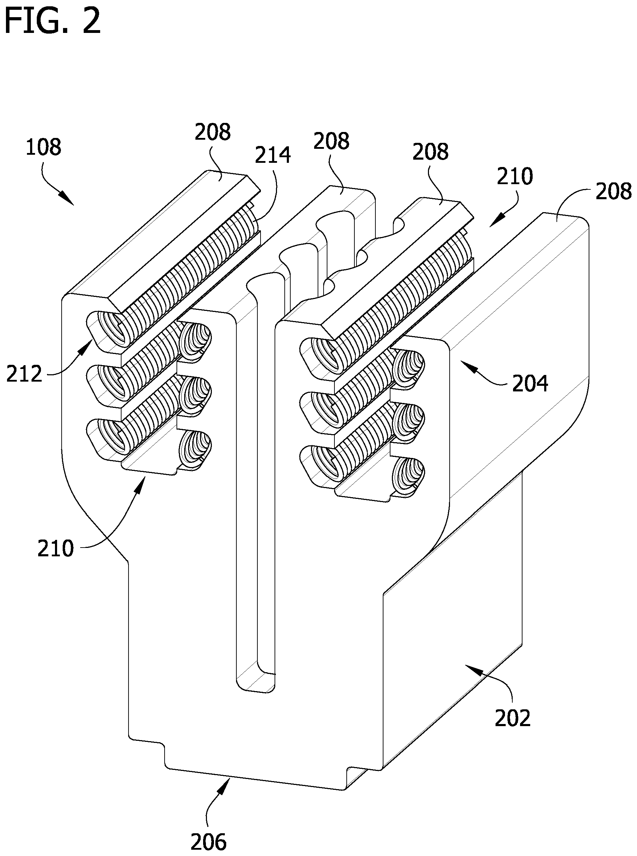

FIG. 2 illustrates circuit breaker connector 108 in accordance with one or more embodiments. As noted previously, the breaker connector 108 is designed to electrically connect an electrical switch, such as circuit breaker 100 of FIG. 1, to an electrical conductor, such as a power bus bar of switchgear assembly 102 of FIG. 1. The circuit breaker 100 is electrically coupled to each power connector 104 by breaker connector 108, three of which are shown in FIG. 1. Referring now to FIG. 2, for example, each breaker connector 108 has a first ("breaker-side" or "proximal") portion, or trunk, designated generally as 202 in FIG. 2, opposing a second ("bus-side" or "distal") portion, designated generally as 204 in FIG. 2. The first portion 202 has a base 206 and is designed to operatively attach to circuit breaker 108 at the wall 112 via the base 206. The second portion 204, in contrast, is designed to operatively attach to one of the power connectors 104 (e.g., interference-fit and clamp onto a stab 122). In an embodiment, each breaker connector 108 includes a plurality of ribs 208 at the second end portion 204. Each pair of ribs 208 defines a slot 210 sized and shaped to receive a stab 122 of power connector 104. When installing circuit breaker 100 into its associated drawout cradle of switchgear assembly 102, the stabs 122 of power connectors 104 are inserted into corresponding slots 210. In this manner, circuit breaker 100 is electrically connected to switchgear assembly 102.

To ensure a low resistance electrical connection to power connector 104, each rib 208 of breaker connector 108 has at least one channel, or groove, 212 formed in a slot-facing, interior surface. A low resistance connection embodying aspects of the present disclosure utilizes one or more electrical springs, or canted coils, 214 to make the connection to stab 122 when breaker connector 108 engages power connector 104. The canted springs 214 are configured to be biased (e.g., lean over) as stab 122 is inserted into slot 210 and, thus, breaker connector 108 accommodates a wide range of misalignment. A pivoting joint, as is known in the art, is no longer required. In an embodiment, multiple linear springs 214 can be structured so that many more contact points can be made between breaker connector 108 and stab 122. In an embodiment, slot 210 is slightly wider than stab 122 when the springs 214 are not positioned in channels 212 and slot 210 is slightly narrower than stab 122 when the springs 214 are positioned in channels 212. Inserting stab 122 into slot 210 (or mounting slot 210 onto stab 122) causes opposing springs 214 to engage the sides of stab 122 and exert a force against it. The springs 214 also exert a force against the interior of channel 212 resulting in an interference fit between power connector 104 and breaker connector 108.

In general, the electrically conductive springs 214 operate as electrical conduits for passing electrical current between the switchgear assembly 102 and the circuit breaker 100. Although not per se required, springs 214 and breaker connectors 108 are structurally identical to each other. The base 206 of breaker connector 108 is configured to rigidly mount or otherwise electrically couple to circuit breaker 100 at rearward facing wall 112 via, for example, one or more bolt cavities through which bolts or other fasteners may be passed. When properly seated on a corresponding breaker connector 108 and mated with a corresponding power connector 104, the electrically conductive springs 214 operate as electrical conduits for passing electrical current between the switchgear assembly 102 and circuit breaker 100.

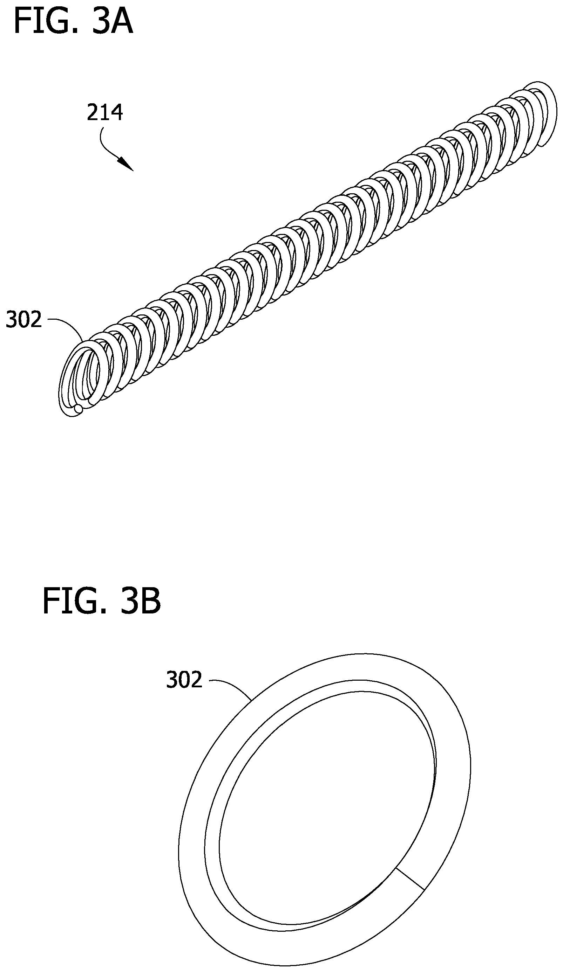

FIGS. 3A and 3B illustrate further aspects of a representative canted spring 214 embodying aspects of the present disclosure. The spring 214 exerts a near-constant force across the working deflection range, and its forces remain consistent even under extreme temperature variations. The spring 214, which is preferably canted according to one or more embodiments, resists compression set, and its individual coils 302 compensate for misalignment, tolerance variations, and mating surface irregularities. As shown in FIG. 3B, the coils 302 of spring 214 may be oblong in shape rather than circular. Adjusting the size of spring groove 212, the size and degree of cant or angle of spring 214, the size and shape of individual coils 302, wire diameter, and other characteristics permits precise control of the force needed to latch, lock, hold, connect, and disconnect for applications requiring both electrical conduction and mechanical connection.

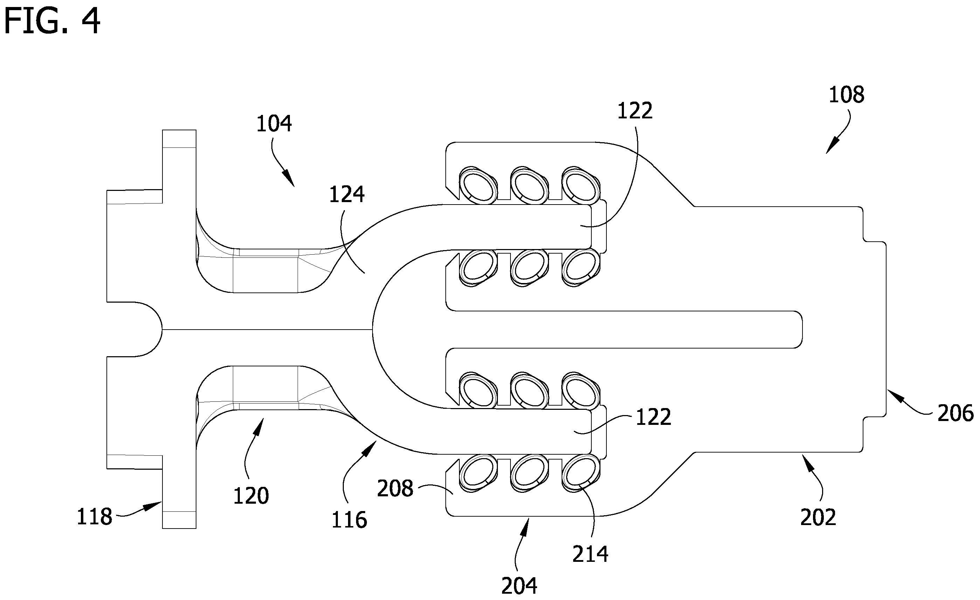

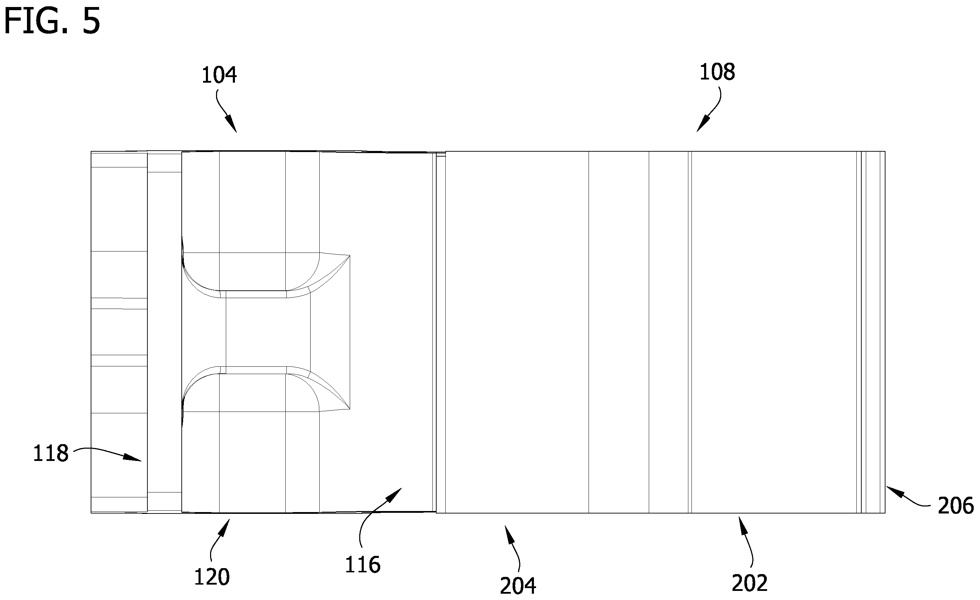

FIGS. 4 and 5 illustrate circuit breaker connector 108 electrically and mechanically coupled to power connector 104 according to an embodiment. When connected in this manner, circuit breaker 100 can be considered part of switchgear assembly 102. By design, breaker connector 108 and power connector 104 form only one sliding joint. The combination of reducing the number of electrical joints from two to one and increasing the total overall number of contact points allows for a joint having relatively lower electrical resistance.

The features of circuit breaker connector 108 embodying aspects of the present disclosure beneficially reduce the electrical resistance of the electrical joint formed between breaker connector 108 and power connector 104 and, in turn, reduce the total power loss of the circuit breaker 100. Reduced power loss supports sustainability and lowers the carbon footprint of power distribution devices and systems. In addition, the internal contact resistance of a conventional circuit breaker assembly can create a large amount of heating inside the circuit breaker, especially at high ampacities. Moreover, Advantageously, the conventional circuit breaker assembly has a relatively small contact area such that it does not allow the heat to escape effectively from the circuit breaker where it can be handled by other mechanisms (e.g., natural convection heat sinks). The features of circuit breaker connector 108 embodying aspects of the present disclosure advantageously provide a greater contact area relative to a conventional connector, which allows more heat to be conducted out of the circuit breaker 100. This reduces the internal temperature of circuit breaker 100 and permits the heat the flowing out of it to be handled with other parts outside of circuit breaker 100 (e.g., circuit breaker terminals or equipment conductors).

It should be noted that the roles of breaker connector 108 and power connector 104 could be reversed without deviating from the scope of the invention. In other words, a connector taking the form of breaker connector 108 could provide an electrical connection to a busbar of switchgear assembly 102 and a connector taking the form of power connector 104 could provide an electrical connection to circuit breaker assembly 100. It should be further noted that aspects of the present disclosure could be applied to other circuit breaker designs (e.g., mounting on the outside of the circuit breaker) and other electrical power connections (e.g., I-Line jaws in a panel board) without deviating from the scope of the invention.

The order of execution or performance of the operations in accordance with aspects of the present disclosure illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the invention.

When introducing elements of the invention or embodiments thereof, the articles "a," "an," "the," and "said" are intended to mean that there are one or more of the elements. The terms "comprising," "including," and "having" are intended to be inclusive and mean that there may be additional elements other than the listed elements.

Not all of the depicted components illustrated or described may be required. In addition, some implementations and embodiments may include additional components. Variations in the arrangement and type of the components may be made without departing from the spirit or scope of the claims as set forth herein. Additional, different or fewer components may be provided and components may be combined. Alternatively, or in addition, a component may be implemented by several components.

The above description illustrates embodiments by way of example and not by way of limitation. This description enables one skilled in the art to make and use aspects of the invention, and describes several embodiments, adaptations, variations, alternatives and uses of the aspects of the invention, including what is presently believed to be the best mode of carrying out the aspects of the invention. Additionally, it is to be understood that the aspects of the invention are not limited in its application to the details of construction and the arrangement of components set forth in the following description or illustrated in the drawings. The aspects of the invention are capable of other embodiments and of being practiced or carried out in various ways. Also, it will be understood that the phraseology and terminology used herein is for the purpose of description and should not be regarded as limiting.

It will be apparent that modifications and variations are possible without departing from the scope of the invention defined in the appended claims. As various changes could be made in the above constructions and methods without departing from the scope of the invention, it is intended that all matter contained in the above description and shown in the accompanying drawings shall be interpreted as illustrative and not in a limiting sense.

In view of the above, it will be seen that several advantages of the aspects of the invention are achieved and other advantageous results attained.

The Abstract and Summary are provided to help the reader quickly ascertain the nature of the technical disclosure. They are submitted with the understanding that they will not be used to interpret or limit the scope or meaning of the claims. The Summary is provided to introduce a selection of concepts in simplified form that are further described in the Detailed Description. The Summary is not intended to identify key features or essential features of the claimed subject matter, nor is it intended to be used as an aid in determining the claimed subject matter.

## Claims

1. A power connection system for electrically connecting a circuit breaker to an electrically conductive busbar, the power connection system comprising:
a first electrically conductive connector, the first electrically conductive connector having a base portion configured to attach to a busbar and at least one stab projecting from the base portion; and
a second electrically conductive connector, the second electrically conductive connector configured to attach to a circuit breaker and to electrically couple the circuit breaker to the busbar via the first electrically conductive connector, the second electrically conductive connector comprising:
a trunk configured to attach to the circuit breaker;
first and second ribs projecting from the trunk, the first and second ribs defining a slot therebetween and each having an opposing slot-facing surface thereof, the slot-facing surface of the first rib having a first channel formed therein and the opposing slot-facing surface of the second rib having a second channel formed therein; and
first and second electrically conductive springs, the first electrically conductive spring positioned within the first channel formed in the slot-facing surface of the first rib and the second electrically conductive spring positioned within the second channel formed in the opposing slot-facing surface of the second rib;
wherein the slot is configured to receive the stab of the first electrically conductive connector such that the first and second electrically conductive springs are biased against the stab when the stab is received within the slot.

2. The power connection system of claim 1, wherein the slot has a first width and the stab has a second width smaller than the first width such that the stab can move within the slot when received therein.

3. The power connection system of claim 2, wherein a spacing between the electrically conductive springs is smaller than the second width when the electrically conductive springs are not biased against the stab.

4. The power connection system of any one of the preceding claims, wherein the first and second ribs are parallel to each other.

5. The power connection system of any one of the preceding claims, wherein the electrically conductive springs are canted.

6. The power connection system of any one of the preceding claims, wherein the electrically conductive springs comprise a plurality of coils, the coils each having an oblong shape.

7. The power connection system of any one of the preceding claims, wherein the trunk and the first and second ribs of the second electrically conductive connector are formed is a single-piece, unitary structure.

8. The power connection system of any one of the preceding claims, wherein the base portion and the stab of the first electrically conductive connector are formed as a single-piece, unitary structure.

9. A switchgear assembly for electrically coupling a circuit breaker to an electrically conductive power busbar, the switchgear assembly comprising:
a housing configured to receive therein the circuit breaker;
an electrical power connector including a stab projecting from a base portion, the base portion of the electrical power connector being mounted to a back portion of the housing and configured to electrically connect to the busbar;
a circuit breaker connector, the circuit breaker connector configured to electrically connect to the circuit breaker and to electrically connect the circuit breaker to the busbar via the electrical power connector, the circuit breaker connector comprising:
a trunk configured to attach to the circuit breaker;
first and second ribs projecting from the trunk, the first and second ribs defining a slot therebetween and each having an opposing slot-facing surface thereof, the slot-facing surface of the first rib having a first channel formed therein and the opposing slot-facing surface of the second rib having a second channel formed therein; and
first and second electrically conductive springs, the first electrically conductive spring positioned within the first channel formed in the slot-facing surface of the first rib and the second electrically conductive spring positioned within the second channel formed in the opposing slot-facing surface of the second rib;
wherein the slot is configured to receive the stab of the electrical power connector such that the first and second electrically conductive springs are biased against the stab when the stab is received within the slot.

10. The switchgear assembly of claim 9, wherein the first and second ribs are parallel to each other.

11. The switchgear assembly of claim 9 or 10, wherein the base portion and the stab of the electrical power connector are formed is a single-piece, unitary structure.

12. A breaker connector for connecting a circuit breaker to an electrically conductive power busbar in an electrical assembly, the electrical assembly having an electrical power connector including a stab projecting from a base portion, the base portion of the electrical power connector configured to electrically connect to the busbar, the breaker connector comprising:
a trunk configured to attach to the circuit breaker;
first and second parallel ribs projecting from the trunk, the first and second ribs defining a slot therebetween and each having an opposing slot-facing surface thereof, the slot-facing surface of the first rib having a first channel formed therein and the opposing slot-facing surface of the second rib having a second channel formed therein; and
first and second electrically conductive springs, the first electrically conductive spring positioned within the first channel formed in the slot-facing surface of the first rib and the second electrically conductive spring positioned within the second channel formed in the opposing slot-facing surface of the second rib;
wherein the slot is configured to receive the stab of the electrical power connector such that the first and second electrically conductive springs are biased against the stab when the stab is received within the slot and the breaker connector electrically connects the circuit breaker to the busbar via the electrical power connector.

13. The apparatus of any one of the preceding claims 9 - 12, wherein the slot has a first width and the stab has a second width smaller than the first width such that the stab can move within the slot when received therein,
wherein a spacing between the electrically conductive springs is in particular smaller than the second width when the electrically conductive springs are not biased against the stab.

14. The apparatus of any one of the preceding claims 9 - 13, wherein each of the electrically conductive springs is canted and comprises a plurality of coils, the coils each having an oblong shape.

15. The apparatus of any one of the preceding claims 9 - 14, wherein the trunk and the first and second ribs of the circuit breaker connector are formed as a single-piece, unitary structure.
